# EUROPÄISCHE PATENTANMELDUNG

(11) **EP 4 137 220 A2**
(43) Veröffentlichungstag der Anmeldung: **22.02.2023**
(21) Anmeldenummer: 22190570.6
(22) Anmeldetag: 16.08.2022
(51) Int. Cl.: B01D 21/00, B01D 21/24, B01D 17/02, C02F 1/40, C02F 9/00, C02F 11/123, E03F 5/00, B01D 17/12, B01D 21/04, B01D 21/18, B01D 21/30, B01D 29/35, B01D 33/044, B01D 33/048, B01D 33/46, B01D 35/153, B01D 35/16

(54) **ABSCHEIDERVORRICHTUNG UND VERFAHREN ZUM REINIGEN VON ABWASSER**

(30) Priorität: 17.08.2021 DE 102021121344
(71) Anmelder: ACO Ahlmann SE & Co. KG, 24782 Büdelsdorf (DE)
(72) Erfinder:
(74) Vertreter: Kilchert, Jochen

(57) **Zusammenfassung**

Die Erfindung betrifft eine Abscheidervorrichtung (10) zum Reinigen von Abwasser, umfassend:
- wenigstens eine Grobfangeinheit (11) zum Abtrennen von in dem zugeführten Abwasser befindlichen Grobstoffen, die eine Fördereinrichtung (12) und ein Gehäuse (13) mit wenigstens einem Zulauf (14) für das zu reinigende Abwasser aufweist;
- wenigstens eine Abscheidereinheit (15) zum Abtrennen von aufschwimmenden Flüssigkeiten, insbesondere von Fetten, und/oder aufschwimmenden Feststoffen und/oder von absinkenden Feinstoffen aus der durch die Grobfangeinheit (11) vorgereinigten Flüssigkeit, insbesondere aus organischem Abwasser, wobei die Abscheidereinheit (15) der Grobfangeinheit (11) in Fließrichtung nachgeordnet ist und wenigstens einen Abscheidebehälter (16) zum Aufnehmen der vorgereinigten Flüssigkeit aufweist, der wenigstens einen Ablauf (17) für gereinigtes Abwasser umfasst;
- wenigstens einen Skimmer (18) zum Entfernen von in dem Abscheidebehälter (16) aufschwimmenden Flüssigkeiten; und
- wenigstens eine Feinstoffentnahmeeinheit (19), die mit dem Abscheidebehälter (16) zur Entnahme von abgesunkenen Feinstoffen, insbesondere von Feinschlamm, verbunden ist, wobei
das Gehäuse (13) der Grobfangeinheit (11) wenigstens einen Absetzbereich (20) zum Aufnehmen von absinkenden Grobstoffen und die Fördereinrichtung (12) wenigstens ein in Förderrichtung (F) umlaufend geschlossenes Fördermittel (21), insbesondere Endlosfördermittel, mit wenigstens einem Räumelement (22) aufweist, wobei das Fördermittel (21) den Absetzbereich (20) zumindest teilweise derart durchläuft, dass das Räumelement (22) im Betrieb die abgesunkenen Grobstoffe aus dem Absetzbereich (20) fördert.

## Beschreibung

Die Erfindung betrifft eine Abscheidervorrichtung und ein Verfahren zum Reinigen von Abwasser. Eine Abscheidervorrichtung nach dem Oberbegriff des Patentanspruchs 1 ist beispielsweise aus EP 3 603 765 A1 bekannt.

Abscheidervorrichtungen dienen herkömmlicherweise zur Abwasserreinigung von Gebäuden. Beispielsweise können Großküchen, Tankstellen und andere Betriebe mit Abscheidervorrichtungen ausgestattet sein, um grobe und feine Feststoffe sowie Fett bzw. Öle aus dem Abwasser abzuscheiden, bevor das Wasser in die Kanalisation gelangt.

Um eine umfangreiche Vorreinigung zu ermöglichen, können derartige Abscheidervorrichtungen mehrere unterschiedliche Einheiten zur schrittweisen Reinigung des Abwassers umfassen. Beispielsweise weist die Abscheidervorrichtung aus der eingangs genannten EP 3 603 765 A1 eine Siebeinheit zum Aussieben von Grobstoffen und eine der Siebeinheit nachgeordnete Abscheidereinheit mit einem Abscheidebehälter zum Abtrennen von Fett und Feinschlamm auf. Zum Entfernen des abgesetzten Feinschlamms bzw. des aufschwimmenden Fettes sind ein Skimmer und eine Feinschlammeinheit vorgesehen. Die ausgesiebten Grobstoffe und der abgesetzte Feinschlamm werden durch entsprechende Fördereinrichtungen in Sammelbehälter gefördert. Um die Grobstoffe in den Sammelbehälter zu fördern, ist die Siebeinheit mit einer Förderschnecke ausgestattet.

Die Abscheidervorrichtung gemäß EP 3 603 758 A1 hat den Nachteil, dass das Sieb der Siebeinheit durch Verstopfen und die Förderschnecke durch Verklemmen bzw. Verschleiß einen erhöhten Wartungsbedarf fordern. Ferner weist die Abscheidervorrichtung dadurch ein erhöhtes Ausfallsrisiko und somit eine reduzierte Betriebssicherheit auf. Um die Wartung zu erleichtern, ist ein Schwenkmechanismus vorgesehen, durch den das Sieb und die Förderschnecke in eine Wartungsstellung schwenkbar sind. Die Siebeinheit weist daher durch eine erhöhte Anzahl von Bauteilen einen aufwändigen Aufbau auf.

Der Erfindung liegt daher die Aufgabe zu Grunde, eine verbesserte Abscheidervorrichtung bereitzustellen, bei der ein Wartungsbedarf reduziert und eine Betriebssicherheit erhöht ist. Der Erfindung liegt ferner die Aufgabe zu Grunde ein Verfahren zum Reinigen von Abwasser anzugeben.

Erfindungsgemäß wird diese Aufgabe im Hinblick auf die Abscheidervorrichtung durch den Gegenstand des Anspruchs 1 gelöst. Hinsichtlich des Verfahrens wird die vorstehend genannte Aufgabe durch den Gegenstand des Anspruchs 15 gelöst.

Konkret wird die Aufgabe durch eine Abscheidervorrichtung zum Reinigen von Abwasser gelöst, wobei die Abscheidervorrichtung folgendes umfasst:
- wenigstens eine Grobfangeinheit zum Abtrennen von in dem zugeführten Abwasser befindlichen Grobstoffen, die eine Fördereinrichtung und ein Gehäuse mit wenigstens einem Zulauf für das zu reinigende Abwasser aufweist;
- wenigstens eine Abscheidereinheit zum Abtrennen von aufschwimmenden Flüssigkeiten, insbesondere von Fetten, und/oder von aufschwimmenden Feststoffen und/oder von absinkenden Feinstoffen aus der durch die Grobfangeinheit vorgereinigten Flüssigkeit, insbesondere aus organischem Abwasser, wobei die Abscheidereinheit der Grobfangeinheit in Fließrichtung nachgeordnet ist und wenigstens einen Abscheidebehälter zum Aufnehmen der vorgereinigten Flüssigkeit aufweist, der wenigstens einen Ablauf für gereinigtes Abwasser umfasst;
- wenigstens einen Skimmer zum Entfernen von in dem Abscheidebehälter aufschwimmenden Flüssigkeiten; und
- wenigstens eine Feinstoffentnahmeeinheit, die mit dem Abscheidebehälter zur Entnahme von abgesunkenen Feinstoffen, insbesondere von Feinschlamm, verbunden ist.

Das Gehäuse der Grobfangeinheit weist wenigstens einen Absetzbereich zum Aufnehmen von absinkenden Grobstoffen und die Fördereinrichtung wenigstens ein in Förderrichtung umlaufend geschlossenes Fördermittel mit wenigstens einem Räumelement auf. Das Fördermittel durchläuft den Absetzbereich zumindest derart teilweise, dass das Räumelement im Betrieb die abgesunkenen Grobstoffe aus dem Absetzbereich fördert.

Die Erfindung hat verschiedene Vorteile. Durch den Absetzbereich müssen die Grobstoffe nicht, wie bei der Abscheidervorrichtung gemäß EP 3 603 758 A1, aus dem Abwasser durch ein Sieb herausgefiltert werden, sondern sinken selbstständig durch Schwerkraft in den Absetzbereich ab. Mit anderen Worten lagern sich die in dem Abwasser befindlichen Grobstoffe mittels Schwerkraft in den Absetzbereich ab. Der Absetzbereich hat somit den Vorteil, dass ein Sieb zum Herausfiltern von Grobstoffen entfällt und somit die Bauteilanzahl der Grobfangeinheit reduziert ist. Zusätzlich entfällt das Risiko eines durch Grobstoffe verstopften Siebes, sodass die Abscheidervorrichtung mit verringertem Wartungsaufwand betreibbar ist. Dies erhöht die Betriebssicherheit, da das Ausfallrisiko verringert ist.

Die Grobfangeinheit ist somit bevorzugt frei von einem Sieb ausgebildet. Mit anderen Worten weist die Grobfangeinheit bevorzugt kein Sieb auf.

Der Absetzbereich bildet einen Aufnahmeraum für absinkende Grobstoffe im zugeführten Abwasser. Der Absetzbereich ist vorzugsweise in das Gehäuse integriert. Der Absetzbereich ist Teil des Gehäuses. Der Absetzbereich ist bevorzugt an einem Tiefpunkt des Gehäuses angeordnet.

Das Fördermittel der Fördereinrichtung durchläuft den Absetzbereich für die Ablagerung der Grobstoffe zumindest teilweise. Mit anderen Worten ist das Fördermittel zumindest abschnittsweise in dem Absetzbereich angeordnet. Das Fördermittel ist in Förderrichtung umlaufend geschlossen ausgebildet. Anders gesagt, ist das Fördermittel ringförmig geschlossen ausgebildet. Das Fördermittel ist vorzugsweise ein Endlosfördermittel. Mit anderen Worten ist das Fördermittel in Förderrichtung als Endlosschleife ausgebildet. Dies hat den Vorteil, dass eine Vielzahl von Räumelementen an dem Fördermittel anordenbar sind, sodass die Ausräumeffizienz steigt.

Das Fördermittel dient zur Beförderung des Räumelements. Mit anderen Worten ist das Räumelement an dem Fördermittel angeordnet, insbesondere befestigt. Vorzugsweise trägt das Fördermittel das Räumelement. Bevorzugt weist das Fördermittel eine Vielzahl an Räumelementen auf. Die Räumelemente sind vorzugsweise in Förderrichtung voneinander beabstandet. Die Räumelemente können an dem Fördermittel, insbesondere gleichmäßig, verteilt angeordnet sein.

Im Betrieb der Fördereinrichtung der Grobfangeinheit wird das Räumelement mittels dem Fördermittel durch den Absetzbereich bewegt. Dabei fährt das Räumelement in den Absetzbereich ein und schiebt darin abgesetzte Grobstoffe in Förderrichtung vor sich her, sodass diese aus dem Absetzbereich befördert werden. Anschließend können die ausgeräumten Grobstoffe in einen ersten Sammelbehälter gefördert bzw. entsorgt werden.

Bei dem Fördermittel handelt es sich somit um keine Förderschnecke. Darin unterscheidet sich die erfindungsgemäße Abscheidervorrichtung zusätzlich von der in EP 3 603 758 A1 beschriebenen Abscheidervorrichtung, bei der eine Förderschnecke die Grobstoffe entfernt. Demgegenüber hat die Fördereinrichtung der erfindungsgemäßen Abscheidervorrichtung den Vorteil, dass die Möglichkeit eines Verklemmens bzw. Verkeilens von Grobstoffen zumindest verringert ist. Der Wartungsbedarf sowie das Ausfallsrisiko der Grobfangeinheit sind daher reduziert.

Der Grobfangeinheit ist die Abscheidereinheit mit dem Abscheidebehälter nachgeordnet. Der Abscheidebehälter ist bevorzugt ein Schwerkraftabscheider. Der Abscheidebehälter nimmt das durch die Grobfangeinheit vorgereinigten Abwasser auf. In dem Abscheidebehälter findet die Abtrennung bzw. Abscheidung von aufschwimmenden Flüssigkeiten, insbesondere von Fett, aufschwimmenden Feststoffen und absinkenden Feinstoffen aus dem vorgereinigten Abwasser statt. Im Betrieb der Abscheidervorrichtung bildet sich im Abscheidebehälter eine obenliegende Schwimmschicht, beispielsweise aus Fett und/oder Feststoffen, aus. Im unteren Bereich des Abscheidebehälters bildet sich eine Schicht aus absinkenden Feinstoffen aus und bilden eine Feinschlammschicht. Die abgelagerten Feinstoffe werden bei Bedarf durch die Feinstoffentnahmeeinheit aus dem Abscheidebehälter entnommen. Um die aufschwimmende Flüssigkeit bzw. die Schwimmschicht zu entfernen, ist der Skimmer vorgesehen. Durch den Ablauf des Abscheidebehälters kann das gereinigte Abwasser in ein angeschlossenes Leitungs-system, insbesondere Kanalsystem, abfließen.

Grobstoffe können grobkörnige Feststoffe sein, die in einer Flüssigkeit, insbesondere in Abwasser, durch ihre Masse schnell absinken. Feinstoffe können feinkörnige Feststoffe sein, die beispielsweise in einer Ansammlung eine schlammartige Menge bilden. Feinstoffe sinken durch ihre vergleichsweise geringe Masse in einer Flüssigkeit, insbesondere Abwasser, langsam ab. Bei der aufschwimmenden Flüssigkeit handelt es sich bevorzugt um Fett. Diese kann zusätzlich oder alternativ Öle umfassen. Zusätzlich kann die aufschwimmende Flüssigkeit einen Feststoffanteil enthalten. Andere aufschwimmende Flüssigkeiten sind möglich.

Die erfindungsgemäße Abscheidervorrichtung kommt bevorzugt zur Reinigung von Abwasser zum Einsatz. Als Abwasser ist verschmutztes Wasser zu verstehen, das Grobstoffe, Feinstoffe sowie aufschwimmende Flüssigkeiten, wie Fett und/oder Öl, und aufschwimmende Feststoffe enthalten kann. Das Abwasser kann zusätzlich oder alternativ organisches Abwasser sein. Die erfindungsgemäße Abscheidervorrichtung ist nicht auf die Reinigung von Abwasser beschränkt. Diese kann auch zur Reinigung von anderen Flüssigkeiten, insbesondere Gemischen, eingesetzt werden.

Bevorzugte Ausführungsformen der Erfindung sind in den Unteransprüchen angegeben.

Bei einer bevorzugten Ausführungsform umfasst das Fördermittel wenigstens ein Band und/oder wenigstens einen Riemen und/oder wenigstens eine Förderkette. Vorzugsweise weist das Fördermittel mehrere Förderketten und/oder mehrere Riemen auf. Alternativ oder zusätzlich kann das Fördermittel mehrere Bänder aufweisen. Besonders bevorzugt sind mindesten zwei Förderketten in einem Abstand nebeneinander angeordnet, an denen das Räumelement angeordnet ist, wobei vorzugsweise mehrere Räumelemente an den Bändern angeordnet sind. Alternativ können mindestens zwei Riemen in einem Abstand nebeneinander angeordnet sein, an denen das Räumelement angeordnet ist, wobei vorzugsweise mehrere Räumelemente an den Bändern angeordnet sind. In einer weiteren Alternative können mindesten zwei Bänder in einem Abstand nebeneinander angeordnet sein, an denen das Räumelement angeordnet ist, wobei vorzugsweise mehrere Räumelemente an den Bändern angeordnet sind.

Die Ausgestaltung des Fördermittels als Band, Förderkette bzw. Riemen stellt eine kostengünstige sowie konstruktiv einfache Variante dar. Diese sind des Weiteren robust und widerstandsfähig und eignen sich daher gut für den Einsatz in feuchter und verdreckter Umgebung.

Bei einer weiteren bevorzugten Ausführungsform weist das Räumelement wenigstens einen Steg auf, der an einem Außenumfang des Fördermittels angeordnet ist und entgegen der Förderrichtung eine Begrenzung für die zu fördernden Grobstoffe bildet. Mit anderen Worten ist der Steg an dem Fördermittel außenliegend angeordnet. Der Steg erstreckt sich vorzugsweise quer zur Förderrichtung. Der Steg ist bevorzugt schildartig ausgebildet. Der Steg kann aus einem Flachmaterial gebildet sein. Alternativ kann der Steg durch ein L-förmiges Profil gebildet sein. Durch den Steg können die abgesetzten Grobstoffe auf einfache Weise aus dem Absetzbereich geschoben und somit entsorgt werden.

Vorzugsweise liegt der Steg mit einer Stegkante an einer Innenseite des Gehäuses auf, sodass keine Grobstoffe unter dem Steg hindurch in den Absetzbereich zurückfallen können.

Vorzugsweise weist das Gehäuse wenigstens einen in Einbaulage schräg ansteigenden Gehäuseabschnitt mit einer Entsorgungskante auf, wobei an dem Gehäuseabschnitt das Fördermittel zumindest teilweise derart entlang in Förderrichtung verläuft, dass das Räumelement im Betrieb die im Absetzbereich befindlichen Grobstoffe über die Entsorgungskante in den ersten Sammelbehälter fördert. Das Gehäuse kann dreieckförmig ausgebildet sein. Das Gehäuse kann alternativ quaderförmig ausgebildet sein. Der schräg ansteigende Gehäuseabschnitt begrenzt vorzugsweise den Absetzbereich teilweise.

Der Gehäuseabschnitt bildet bevorzugt eine Austragrampe, entlang derer das Räumelement im Betrieb die Grobstoffe fördert. Der schräge Gehäuseabschnitt hat den Vorteil, dass Grobstoffe, die über das Räumelement bzw. den Steg des Räumelements treten, wieder in den Absetzbereich zurückfallen und beim nächsten Durchlauf des Räumelementes oder von einem nachfolgendem weiteren Räumelement durch den Absetzbereich mitgenommen werden. Somit ist sichergestellt, dass im Wesentlichen alle abgesetzten Grobstoffe aus dem Absetzbereich gefördert werden. Dies erhöht die Funktionssicherheit der Grobfangeinheit.

Das Gehäuse kann wenigstens einen Ablauf für das vorgereinigte Abwasser aufweisen, der in Einbaulage der Grobfangeinheit von dem Zulauf nach unten versetzt ist. Mit anderen Worten ist ein Gefällesprung, insbesondere ein Höhenversatz, zwischen dem Zulauf und dem Einlauf vorhanden. Dadurch wird erreicht, dass kein dem Gehäuse zugeführtes Abwasser durch den Zulauf rückgestaut, sondern durch den Ablauf stets aus dem Gehäuse abgeführt wird. Alternativ können der Ablauf und der Zulauf in Einbaulage auf derselben Höhe angeordnet sein. Mit anderen Worten können der Ablauf und der Zulauf eine gleiche Höhenlage aufweisen. Vorzugsweise ist der Absetzbereich in Einbaulage unterhalb einer Ablaufkante des Ablaufs vorgesehen.

Vorzugsweise weist die Fördereinrichtung mehrere Umlenkrollen auf, an denen das Fördermittel umgelenkt ist, wobei das Fördermittel mit jeweils einem Umfang der Umlenkelemente zumindest abschnittsweise in Kontakt steht. Die Umlenkrollen können derart angeordnet sein, dass der Verlauf des Fördermittels der Innenkontur des Gehäuses entspricht. Mit anderen Worten können die Umlenkrollen derart angeordnet sein, dass das Fördermittel zumindest im Absetzbereich entlang einer Innenseite des Gehäuses verläuft. Zumindest eine der Umlenkrollen ist bevorzugt in dem Absetzbereich angeordnet. Über die Umlenkrollen ist das Fördermittel platzsparend sowie auf einfache Weise in dem Gehäuse geführt. Ferner sind Umlenkrollen herkömmlicherweise langlebig und erfordern somit einen geringen Wartungsbedarf.

Bevorzugt ist wenigstens eine der Umlenkrollen mit einem Antrieb, insbesondere einem Elektromotor, gekoppelt, der die Umlenkrolle im Betrieb in Rotation versetzt, um das Räumelement in Förderrichtung zu bewegen. Die mit dem Antrieb gekoppelte Umlenkrolle kann eine Außenverzahnung aufweisen, die mit dem Fördermittel zumindest abschnittsweise im Eingriff steht. Alternativ oder zusätzlich kann die Umlenkrolle eine zumindest abschnittsweise glatte Außenumfangsfläche aufweisen, über die das Fördermittel reibschlüssig angetrieben wird.

Bei einer bevorzugten Ausführungsform weist die Feinstoffentnahmeeinheit eine Siebeinrichtung zum Entwässern und Entsorgen der Feinstoffe und wenigstens eine weitere Fördereinrichtung auf, die mit dem Abscheidebehälter und der Siebeinrichtung über wenigstens eine Leitung verbunden ist. Die Leitung ist bevorzugt eine Saug-/Druckleitung, in der eine Pumpe angeordnet ist. Die Sieb-einrichtung dient zum Entwässern und Entsorgen von entnommenen Feinstoffmengen. Die Feinstoffe können somit mit einem verringerten Feuchtigkeitsanteil beispielsweise in einem zweiten Sammelbehälter oder im ersten Sammelbehälter gelagert werden.

Besonders bevorzugt weist die Siebeinrichtung wenigstens ein Siebelement mit einem über einen Umfang verteilten Flüssigkeitsaustrittbereich und zwei Stirnseiten auf, wobei das Siebelement an einer ersten Stirnseite mit der weiteren Fördereinrichtung fluidverbunden ist und an einer zweiten Stirnseite druckabhängig öffenbar ist. Der Flüssigkeitsaustrittbereich kann eine Vielzahl von Durchtrittsöffnungen umfassen. Zusätzlich oder alternativ kann der Flüssigkeitsaustrittbereich wenigstens ein Filterelement aufweisen, das nach außen durch mehrere voneinander beabstandete Siebrippen gehalten ist. Vorzugsweise ist das Siebelement ein Siebrohr. Im Betrieb wird bei Bedarf die weitere Fördereinrichtung aktiviert, sodass in dem Abscheidebehälter abgelagerte Feinstoffe, insbesondere Feinschlamm, dem Siebelement über die erste Stirnseite zugeführt werden.

Durch das Zuführen von Feinstoffen steigt der Druck im Inneren des Siebelements solange, bis ein Grenzstaudruck erreicht wird. Bei Erreichen des Grenzstaudrucks öffnet die zweite Stirnseite, sodass die zugeführten Feinstoffe über die zweite Stirnseite beispielsweise in einen/den ersten oder einen/den zweiten Sammelbehälter entweichen. Bis zu dem Erreichen des Grenzstaudrucks ist die zweite Stirnseite des Siebelements verschlossen. Über die umfänglich verteilten Öffnungen kann Flüssigkeit, die durch den steigenden Druck im Inneren des Siebelements aus der Feinstoffmenge gepresst wird, abfließen. Durch das vorgenannte Siebelement ist während dem Entnahmevorgang eine vollautomatische Entsorgung und Entwässerung der entnommenen Feinstoffe realisiert.

Bevorzugt weist das Siebelement wenigstens einen Ventilkörper auf, der die zweite Stirnseite federbelastet verschließt, wobei die zweite Stirnseite einen Ventilsitz für den Ventilkörper bildet. Alternativ oder zusätzlich kann der Ventilkörper die zweite Stirnseite schwerkraftbelastet verschließen. Dazu kann wenigstens ein Gegengewicht vorgesehen sein, das den Ventilkörper gegen die zweite Stirnseite des Siebelements anpresst. Vorzugsweise ist der Ventilkörper durch eine gegen die zweite Stirnseite federvorgespannte Platte gebildet. Alternativ oder zusätzlich kann der Ventilkörper kegelförmig, insbesondere kegelstumpfförmig, ausgebildet sein. Im geschlossenen Zustand sitzt der Ventilkörper in die zweite Stirnseite ein. Mit anderen Worten bilden der Ventilkörper und der Ventilsitz im geschlossenen Zustand einen Verschluss des Siebelements. Das Siebelement umfasst somit vorzugsweise wenigstens ein Federelement, insbesondere eine Feder, die den Ventilkörper gegen die zweite Stirnseite vorgespannt presst. Hierbei ist eine besonders ausfallssichere Lösung zur Entsorgung der Feinstoffmenge realisiert. Das Öffnen sowie das Schließen der zweiten Stirnseite erfolgt rein mechanisch in Abhängigkeit von dem im Inneren des Siebelements vorherrschenden Druck über den federbelasteten Ventilkörper.

Bei einer Ausführungsform weist die Siebeinrichtung wenigstens einen Auffangbereich auf, der mit dem Flüssigkeitsaustrittbereich des Siebelements korrespondiert, um aus den Feinstoffen austretende Flüssigkeit aufzunehmen, wobei der Auffangbereich mit dem Abscheidebehälter zur Flüssigkeitsrückführung fluidverbunden ist. Der Auffangbereich kann als Hüllrohr ausgebildet sein, welches das Siebelement umgibt. Mit anderen Worten kann der Auffangbereich zwischen einem das Siebelement umgebenden Gehäuseteil und dem Siebelement angeordnet sein. Der Auffangbereich kann mit dem Abscheidebehälter über eine Leitung verbunden sein. Vorzugsweise ist der Auffangbereich mit einem Zulauf des Abscheidebehälters fluidverbunden. Der Auffangbereich kann in eine Zulaufleitung des Abscheidebehälters münden.

Bei dieser Ausführungsform ist die Siebeinrichtung außerhalb des Abscheidebehälters angeordnet. Alternativ kann die Siebeinrichtung in dem Abscheidebehälter integriert angeordnet sein. Dabei kann der Auffangbereich entfallen und die aus der Feinstoffmenge entwässerte Flüssigkeit in den Abscheidebehälter direkt abfließen.

Die Siebeinrichtung und/oder das Gehäuse der Grobfangeinheit können mit dem ersten Sammelbehälter und/oder einem zweiten Sammelbehälter verbunden sein. Mit anderen Worten können das Gehäuse der Grobfangeinheit und die Siebeinrichtung mit einem gemeinsamen Sammelbehälter zur Entsorgung von Grob- und Feinstoffen verbunden sind. Alternativ oder zusätzlich ist möglich, dass die Siebeinrichtung und das Gehäuse jeweils mit einem separaten Sammelbehälter verbunden sind.

Bei einer bevorzugten Ausführungsform ragt der Skimmer in den Abscheidebehälter zumindest teilweise derart ein, dass wenigstens ein Flüssigkeitsaufnahmeelement mit einer Schicht aus aufschwimmender Flüssigkeit, insbesondere mit einer aufschwimmenden Fettschicht, in Kontakt steht. Mit anderen Worten ist der Skimmer an dem Abscheidebehälter derart angeordnet, dass das Flüssigkeitsaufnahmeelement in die aufschwimmende Flüssigkeitsschicht eintaucht. Das Flüssigkeitsaufnahmeelement ist dazu ausgebildet, die aufschwimmende Flüssigkeit, insbesondere Fett, aufzunehmen und zu transportieren. Dabei haftet die aufschwimmende Flüssigkeit mittels Adhäsionswirkung an dem Flüssigkeitsaufnahmeelement. Vorzugsweise ragt der Skimmer in Einbaulage von oben in den Abscheidebehälter ein. Der Skimmer ist somit vorzugsweise in Einbaulage stehend angeordnet. Durch den Skimmer kann bei Bedarf schnell und einfach die angesammelte, aufschwimmende Flüssigkeit aus dem Abscheidebehälter entfernt werden.

Vorzugsweise ist das Flüssigkeitsaufnahmeelement umlaufend geschlossen und über zumindest zwei Umlenkrollen geführt, wobei wenigstens eine der Umlenkrollen das Flüssigkeitsaufnahmeelement antreibt. Mit anderen Worten ist das Flüssigkeitsaufnahmeelement bevorzugt ein ringförmig geschlossenes Skimmerband. Alternativ kann das Flüssigkeitsaufnahmeelement ein Skimmerband mit offenen Enden sein, das im Betrieb reversierend bewegbar ist. Das Skimmerband kann dabei vor und zurückbewegt werden.

In einer Variante kann das Flüssigkeitsaufnahmeelement als Simmerschlauch ausgebildet sein. Alternativ ist möglich, dass das Flüssigkeitsaufnahmeelement als Skimmerscheibe und/oder als Skimmertrommel ausgebildet ist. Das Flüssigkeitsaufnahmeelement verläuft vorzugsweise um die beiden Umlenkrollen. Eine der beiden Umlenkrollen kann eine Verzahnung aufweisen, die mit dem Flüssigkeitsaufnahmeelement zum Antreiben in Eingriff steht. Bevorzugt umfasst eine der beiden Umlenkrollen eine Übertragungsfläche, die mit dem Flüssigkeitsaufnahmeelement zur Bewegungsübertragung in reibschlüssigem Kontakt steht. Die antreibende Umlenkrolle ist vorzugsweise mit wenigstens einem Elektromotor gekoppelt. Durch diese Ausführungsformen ist es möglich, den Skimmer anforderungsspezifisch auszugestalten, sodass eine Variantenvielfalt in der Ausführung des Skimmers und somit der Abscheidervorrichtung erhöht ist.

Bei einer Ausführungsform ist wenigstens ein Auffangbehälter vorgesehen, der in Einbaulage am Abscheidebehälter oben angeordnet ist, wobei der Skimmer in den Auffangbehälter zum Ablagern von aufgenommener Flüssigkeit, insbesondere von Fett, aus dem Abscheidebehälter zumindest teilweise einragt. Mit anderen Worten ragt der Skimmer einerseits in den Abscheidebehälter zur Aufnahme der aufschwimmenden Flüssigkeitsschicht und andererseits in den Auffangbehälter zum Ablagern der aufgenommenen Flüssigkeit ein. Der Skimmer kann in den Auffangbehälter kontinuierlich oder diskontinuierlich einragen. Der Auffangbehälter ist dazu bevorzugt in Einbaulage auf dem Abscheidebehälter oben angeordnet. Der Auffangbehälter kann mit dem Abscheidebehälter einteilig ausgebildet sein. Alternativ kann der Auffangbehälter ein separates Teil bilden, das an dem Abscheidebehälter befestigt ist. Durch die Anordnung des Auffangbehälters auf dem Abscheidebehälter kann der Skimmer entsprechend klein ausgeführt werden. Dies reduziert die Kosten der Abscheidervorrichtung.

Unabhängig davon oder zusätzlich dazu kann der Skimmer wenigstens einen Abstreifer aufweisen, der im Betrieb die aufgenommene Flüssigkeit von dem Flüssigkeitsaufnahmeelement in einen Auffangbehälter abstreift. Mit anderen Worten dient der Abstreifer zum Entfernen der an einer Oberfläche des Flüssigkeitsaufnahmeelements anhaftenden Flüssigkeit, insbesondere des Fettes.

Vorzugsweise weist der Abscheidebehälter wenigstens einen in Einbaulage untenliegenden Feinstoffsammelbereich, wenigstens einen in Einbaulage obenliegenden Aufschwimmbereich für aufschwimmende Flüssigkeit und/oder Feststoffe und einen dazwischenliegenden Abscheidebereich auf, in den wenigstens ein Zulauf und der Ablauf in Einbaulage von oben einragt. Bei dem Abscheidebehälter handelt es sich bevorzugt um einen Schwerkraftabscheider. Der Abscheidebehälter kann im Feinstoffsammelbereich wenigstens eine Bodenschräge aufweisen, die die abgesetzten Feinstoffen, insbesondere den Feinschlamm, an eine Entnahmestelle für die Feinstoffentnahmeeinheit leitet.

Alternativ kann der Feinstoffsammelbereich frei von Bodenschrägen sein. Bevorzugt können der Zulauf und/oder der Ablauf des Abscheidebehälters in Einbaulage seitlich in den Abscheidebehälter münden. Vorzugsweise weisen der Zulauf und/oder der Ablauf einen umgelenkten Verlauf an, sodass die diese seitlich in den Abscheidebehälter einragen und anschließend mit einem freien Ende nach unten stehen. Das freie Ende des Zulaufs bzw. Ablaufs befindet sich bevorzugt auf der Höhe des Abscheidebereichs in dem eine gleichmäßige Durchströmung des Abscheidebehälters erfolgt. Durch den Ablauf ist eine gezielte Beeinflussung des Flüssigkeitsspiegels in dem Abscheidebehälter möglich.

Weiter vorzugsweise ist wenigstens eine Steuereinheit mit der Grobfangeinheit und/oder der Abscheidereinheit und/oder der Feinstoffentnahmeeinheit und/oder dem Skimmer zum Ansteuern signalübertragend verbunden. Mit anderen Worten kann eine Steuereinheit vorgesehen sein, über die als zentrale Steuerung der Betrieb der Abscheidervorrichtung steuerbar ist. Zusätzlich oder alternativ kann für jede Einheit, d.h. für die Grobfangeinheit, die Abscheidereinheit, die Feinstoffeinheit sowie den Skimmer, wenigstens eine separate Steuereinheit vorgesehen sein, um den Betrieb zu steuern.

Nach einem nebengeordneten Aspekt betrifft die Erfindung ein Verfahren zum Reinigen von Abwasser mit einer, insbesondere erfindungsgemäßen, Abscheidervorrichtung, wobei das Verfahren folgende Schritte umfasst:
- Entfernen von Grobstoffen aus dem Abwasser durch wenigstens eine Grobfangeinheit, das eine Fördereinrichtung und ein Gehäuse mit wenigstens einem Zulauf für das zu reinigende Abwasser aufweist;
- Abtrennen von in dem vorgereinigten Abwasser befindlichen Fetten und/oder Feinstoffen durch wenigstens eine Abscheidereinheit, die der Grobfangeinheit in Fließrichtung nachgeordnet ist und wenigstens einen Abscheidebehälter zum Aufnehmen der vorgereinigten Flüssigkeit aufweist;
- Entfernen von in dem Abscheidebehälter aufschwimmender Flüssigkeit, insbesondere Fett, durch wenigstens einen Skimmer; und
- Entnehmen von in dem Abscheidebehälter abgesunkenen Feinstoffen, insbesondere von Feinschlamm, durch wenigstens eine Feinstoffentnahmeeinheit, die mit dem Abscheidebehälter verbunden ist.

Das Gehäuse der Grobfangeinheit umfasst wenigstens einen Absetzbereich, in den Grobstoffe des zugeführten Abwassers absinken, und die Fördereinrichtung weist wenigstens ein in Förderrichtung umlaufend geschlossenes Fördermittel mit wenigstens einem Räumelement auf, wobei das Fördermittel den Absetzbereich zumindest teilweise derart durchläuft, dass das Räumelement die abgesunkenen Grobstoffe aus dem Absetzbereich fördert.

Bei einer bevorzugten Ausführungsform werden die Grobfangeinheit und/oder die Feinstoffentnahmeeinheit und/oder der Skimmer durch wenigstens eine Steuereinheit, insbesondere in Intervallen, angesteuert. Mit anderen Worten können die Grobfangeinheit, die Feinstoffentnahmeeinheit und/oder der Skimmer in Abhängigkeit von hinterlegten Intervallen gesteuert werden. Besonders bevorzugt sind die Intervalle Zeitintervalle und/oder Volumenintervalle. Die Intervalle sind vorzugsweise anpassbar. Der Skimmer kann zusätzlich oder alternativ durch wenigstens einen Schichtsensor, insbesondere Fettschichtsensor, angesteuert werden. Hier ist vorteilhaft, dass die jeweilige Einheit bei Bedarf aktiviert bzw. deaktiviert wird und somit die Effizienz der Abscheidervorrichtung erhöht ist.

Zu den Vorteilen des Verfahrens zum Reinigen von Abwasser wird auf die im Zusammenhang mit der Abscheidervorrichtung erläuterten Vorteile verwiesen. Darüber hinaus kann das Verfahren alternativ oder zusätzlich einzelne oder eine Kombination mehrerer zuvor in Bezug auf die Abscheidervorrichtung genannte Merkmale aufweisen.

Die Erfindung wird nachstehend mit weiteren Einzelheiten unter Bezug auf die beigefügten Zeichnungen näher erläutert. Die dargestellten Ausführungsformen stellen schematische Beispiele dar, wie die erfindungsgemäße Vorrichtung und die erfindungsgemäße Bewegungseinrichtung ausgestaltet sein können.

In diesen zeigen,
- Fig. 1: eine schematische Darstellung einer Abscheidervorrichtung nach einem bevorzugten erfindungsgemäßen Ausführungsbeispiel;
- Fig. 2: eine perspektivische Ansicht einer Abscheidervorrichtung nach einem weiteren erfindungsgemäßen Ausführungsbeispiel;
- Fig. 3: einen Längsschnitt durch die Abscheidervorrichtung gemäß Fig. 2;
- Fig. 4: eine perspektivische Ansicht einer Grobfangeinheit der Abscheidervorrichtung gemäß Fig. 2;
- Fig. 5: ein Längsschnitt durch eine Siebeinrichtung der Abscheidervorrichtung gemäß Fig. 2; und
- Fig. 6: einen Detailausschnitt eines Längsschnitts durch einen Abscheidebehälter der Abscheidervorrichtung gemäß Fig. 2 im Bereich eines Skimmers.

In der nachfolgenden Beschreibung werden für gleiche und gleichwirkende Teile dieselben Bezugsziffern verwendet.

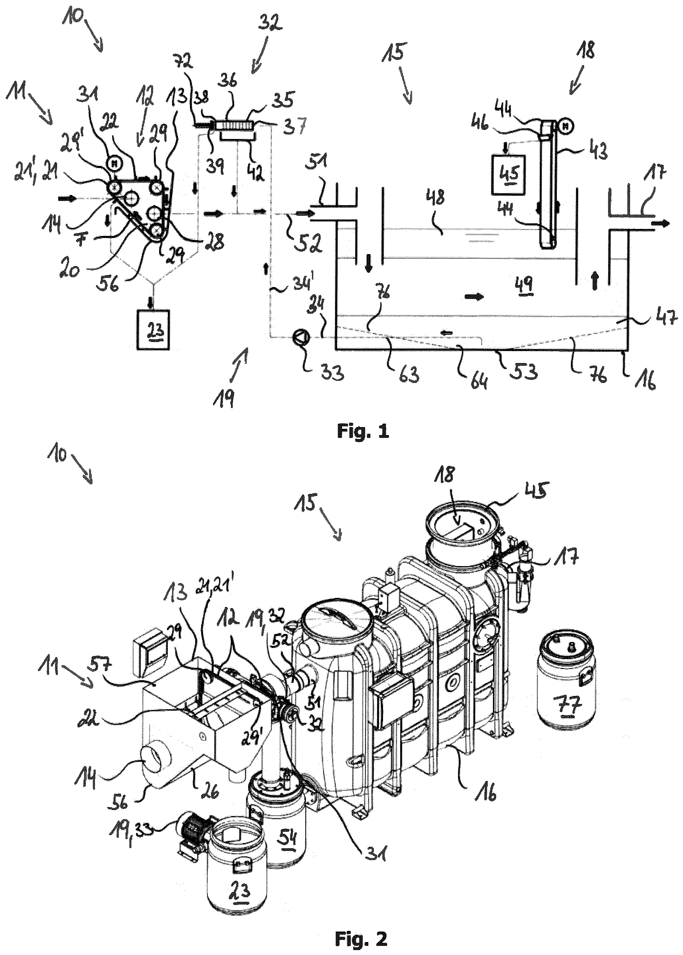

Fig. 1 zeigt eine schematische Darstellung einer Abscheidervorrichtung 10 nach einem bevorzugten erfindungsgemäßen Ausführungsbeispiel. Die Abscheidervorrichtung 10 gemäß Fig. 2 ist bis auf entfallene Bodenschrägen und einen zusätzlichen Sammelbehälter mit der Abscheidevorrichtung gemäß Fig. 1 identisch. Die nachfolgende Beschreibung gilt deshalb für beide erfindungsgemäßen Ausführungsbeispiele der Abscheidervorrichtung 10.

Die Abscheidervorrichtung 10 dient zum Reinigen von verschmutzen Flüssigkeiten. Im konkreten Fall dient die Abscheidervorrichtung 10 zum Reinigen von verschmutztem Wasser. Das verschmutzte Wasser kann Grobstoffe, Feinstoffe sowie aufschwimmende Flüssigkeiten, wie Fett und/oder Öl, und/oder aufschwimmende Feststoffe enthalten. Das Abwasser kann organisches Abwasser umfassen. In der folgenden Beschreibung werden das verschmutzte Wasser als Abwasser, die Feinstoffe als Feinschlamm und die aufschwimmende Flüssigkeit als Fett bezeichnet. Andere Feinstoffe sowie aufschwimmende Flüssigkeiten, insbesondere mit Feststoffanteil, sind möglich.

Die Abscheidervorrichtung 10 umfasst eine Grobfangeinheit 11, eine Abscheidereinheit 15, eine Feinstoffentnahmeeinheit 19 und einen Skimmer 18. Die Grobfangeinheit 11 weist einen Zulauf 14 für das zu reinigende Abwasser auf und dient zum Abtrennen von Grobstoffen aus dem Abwasser. Die Abscheidereinheit 15 ist der Grobfangeinheit 11 in Fließrichtung des Abwassers nachgeordnet und umfasst einen Abscheidebehälter 16. Der Abscheidebehälter 16 ist mit der Grobfangeinheit 11 zur Aufnahme von vorgereinigtem Abwasser durch eine Rohrleitung 52 fluidverbunden. Der Abscheidebehälter 16 weist einen Ablauf 17 für das gereinigte Abwasser auf. Der Ablauf 17 kann mit einem Rohrleitungssystem, beispielsweise eines Kanalsystems, verbunden sein. In dem Abscheidebehälter 16 erfolgt die Abtrennung von Feinschlamm und Fett aus dem Abwasser. Konkret steigt das Fett in dem Abwasser auf und bildet in dem Abscheidebehälter 16 ein auf dem Abwasser bzw. Wasser aufschwimmende Fettschicht. Die im Abwasser enthaltenen Feinstoffe sinken im Abscheidebehälter 16 ab und bilden im Bereich eines Behälterbodens 53 eine Feinschlammschicht.

Die Feinstoffentnahmeeinheit 19 weist eine Siebeinrichtung 32 und eine Fördereinrichtung 33 zur Entnahme von in dem Abscheidebehälter 16 abgelagerten Feinschlamm auf. Zum Entfernen der im Betrieb der Abscheidervorrichtung 10 ausgebildeten aufschwimmenden Fettschicht ist der Skimmer 18 an dem Abscheidebehälter 16 angeordnet. Der Skimmer 18 ist mit einem Auffangbehälter 45 zum Lagern des zu entfernenden Fettes verbunden. Bei der Abscheidervorrichtung 10 gemäß Fig. 1 sind die Siebeinrichtung 32 und die Grobfangeinheit 11 mit einem gemeinsamen Sammelbehälter 23 zum Entsorgen von Grobstoffen und Feinschlamm verbunden. Bei der Abscheidervorrichtung 10 gemäß Fig. 2 ist die Grobfangeinheit 11 mit einem ersten Sammelbehälter 23 und die Siebeinrichtung 32 mit einem zweiten Sammelbehälter 54 verbunden. Mit anderen Worten ist der Grobfangeinheit 11 und der Siebeinrichtung 32 jeweils ein separater Sammelbehälter 23, 54 zugeordnet. Auf die genannten Einheiten 11, 15, 19 und den Skimmer 18 wird nachfolgend im Einzelnen genauer eingegangen.

Bei der Abscheidervorrichtung 10 gemäß Fig. 1 und 2 weist die Grobfangeinheit 11 eine Fördereinrichtung 12 und ein Gehäuse 13 auf. Das Gehäuse 13 weist einen Zulauf 14 für Abwasser auf. Das Gehäuse 13 umfasst einen Innenraum 55, der in Einbaulage nach oben offen ist. Der Innenraum 55 kann durch einen Deckel verschlossen sein. Das Gehäuse 13 ist im Wesentlichen dreieckförmig ausgebildet. Das Gehäuse 13 umfasst einen Absetzbereich 20 zum Ablagern von Grobstoffen. Der Absetzbereich 20 umfasst einen Tiefpunkt 56 des Gehäuses 13. Das Gehäuse 13 weist eine Rückwand 57 und einen schräg ansteigenden Gehäuseabschnitt 26 auf. Die Rückwand 57 und der schrägansteigende Gehäuseabschnitt 26 sind über den Tiefpunkt 56 miteinander verbunden. Der Gehäuseabschnitt 26 steigt somit ausgehend vom Tiefpunkt 56 winkelig an. Der Gehäuseabschnitt 26 bildet eine Austragrampe für die Grobstoffe.

Der schräg ansteigende Gehäuseabschnitt 26 weist eine Entsorgungskante 27 und einen Entsorgungsabschnitt 58 auf. Im Betrieb werden die Grobstoffe durch die Fördereinrichtung 12 zur Entsorgungskante 27 gefördert und fallen über diese den Entsorgungsabschnitt 58. Der Entsorgungsabschnitt 58 ist abschnittsweise trichterförmig ausgebildet. Der Entsorgungsabschnitt 58 weist eine Öffnung 59' auf, die in den ersten Sammelbehälter 23 mündet.

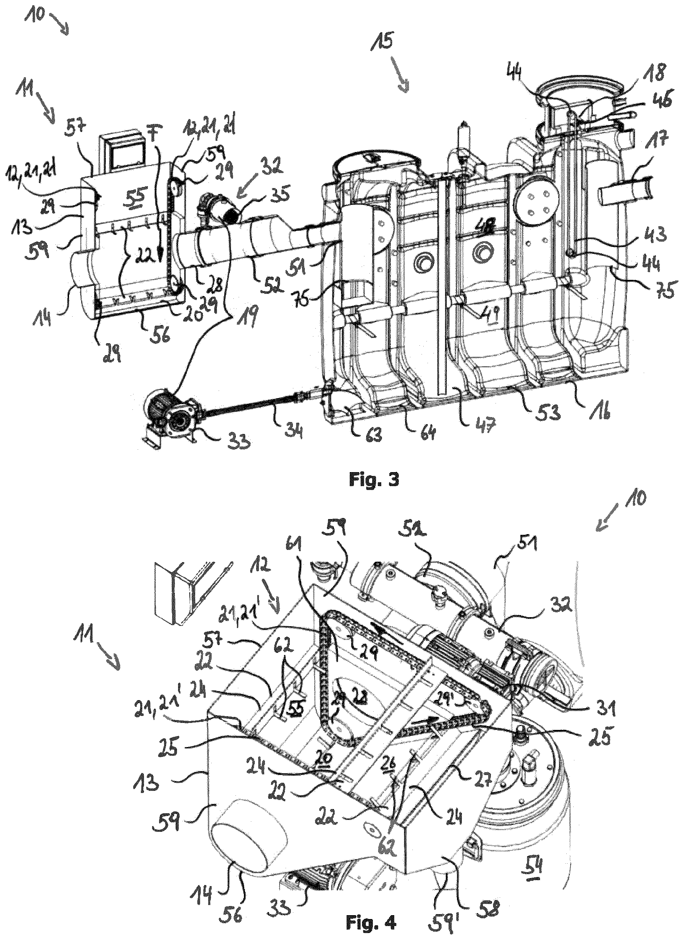

Der Absetzbereich 20 ist im Gehäuse 13 in Einbaulage unten angeordnet. Konkret befindet sich der Absetzbereich 20 in Einbaulage unterhalb des Zulaufs 14. Das Gehäuse 13 weist einen Ablauf 28 auf. Ebenso liegt der Absetzbereich 20 in Einbaulage unterhalb des Ablaufs 28. Der Zulauf 14 und der Ablauf 28 liegen bei der Abscheidervorrichtung 10 gemäß Fig. 2 auf derselben Höhe. Dies ist in Fig. 3 gut erkennbar. Im Unterschied dazu, ist bei der Abscheidervorrichtung 10 gemäß Fig. 1 der Ablauf 28 in Bezug auf den Zulauf 14 in Einbaulage nach unten versetzt. Mit anderen Worten weist hier der Ablauf 28 von dem Zulauf 14 einen Höhenversatz nach unten auf. Das Gehäuse 13 weist zweite gegenüberliegende Seitenwände 59 auf, wobei an einer ersten Seitenwand der Zulauf 14 und an einer gegenüberliegenden zweiten Seitenwand der Ablauf 28 angeordnet sind.

Wie vorstehend beschrieben, weist die Grobfangeinheit 11 die Fördereinrichtung 12 auf. Die Fördereinrichtung 12 umfasst ein Fördermittel 21 mit mehreren Räumelementen 22. Das Fördermittel 21 weist zwei quer zu einer Förderrichtung F gegenüber angeordnete Förderketten 21' auf. Die Förderketten 21' sind in Förderrichtung F umlaufend geschlossen ausgebildet. Mit anderen Worten sind die Förderketten 21' ringförmig geschlossen. Die Förderketten 21' sind quer zur Förderrichtung F voneinander beabstandet. Konkret ist jeweils eine der Förderketten 21' an einer Innenseite jeweils einer der Seitenwände 59 des Gehäuses 13 angeordnet. Mit anderen Worten verläuft jeweils eine der Förderketten 21' an jeweils einer Innenseite einer der Seitenwände 59. Oder anders gesagt, ist jeweils eine der Förderketten 21' an einer der Seitenwände 59 innenseitig angeordnet.

An den Seitenwänden 59 sind jeweils drei Umlenkrollen 29, 29' angeordnet, die die Förderkette 21' umlenken. Eine der Umlenkrollen 29' ist mit einem elektrischen Antrieb 31, insbesondere einem Elektromotor, gekoppelt. Die Umlenkrolle 29' ist als Zahnrad ausgebildet. Die Umlenkrolle 29' greift über die Verzahnung in die Förderkette 21' zur Bewegung in Förderrichtung F ein. Die beiden weiteren Umlenkrollen 29 dienen zur Führung der Förderkette 21'. Die Förderkette 21' ist durch die mit dem elektrischen Antrieb 31 gekoppelten Umlenkrolle 29' in Förderrichtung F bewegbar. Zumindest eine der beiden Umlenkrollen 29' ist mit dem Antrieb 31 gekoppelt. Es können auch beide Umlenkrollen 29' mit demselben Antrieb 31 gekoppelt sein. Alternativ kann den Umlenkrollen 29' jeweils ein Antrieb 31 zugeordnet sein.

Wie in Fig. 3 gezeigt ist, sind jeweils zwei Umlenkrollen 29, 29' an den Seitenwänden 59 einander gegenüber angeordnet. Die jeweils gegenüber angeordneten Umlenkrollen 29, 29' bilden Paare und liegen auf einer gemeinsamen Rotationsachse. An den Innenseiten der Seitenwände 59 des Gehäuses 13 sind Kettenführungsabschnitte 61 angeordnet, die die Förderkette 21' zumindest führen.

Auf den Förderketten 21' sind mehrere Räumelemente 22 angeordnet. Insgesamt sind drei Räumelemente 22 vorgesehen. Die Räumelemente 22 sind nicht auf eine konkrete Anzahl beschränkt. Auf den Förderketten 21' kann alternativ nur ein Räumelement 22 angeordnet sein. Die Räumelemente 22 dienen zum Austrag der im Absetzbereich 20 abgelagerten Grobstoffe. Das jeweilige Räumelement 22 erstreckt sich quer zur Förderrichtung F. Das Räumelement 22 ist an beiden Förderketten 21' angeordnet. Das Räumelement 22 verbindet die beiden Förderketten 21'. Die beiden Förderketten 21' tragen das jeweilige Räumelement 22. Das Räumelement 22 ist auf einem Außenumfang 25 der Förderketten 21' angeordnet. Die Räumelemente 22 sind an den Förderketten 21' in Förderrichtung F verteilt angeordnet. Die Räumelemente 22 können gleichmäßig verteilt sein. Die Räumelemente 22 sind voneinander in Förderrichtung F an den Förderketten 21' beabstandet.

Das jeweilige Räumelement 22 weist einen Steg 24 auf, der sich quer zur Förderrichtung F erstreckt. Der Steg 24 bildet entgegen der Förderrichtung F eine Begrenzung für die Grobstoffe. Das Räumelement 22 ist L-förmig ausgebildet. Das Räumelement 22 ist länglich ausgebildet. Das Räumelement 22 bildet ein Winkelprofil. Der Steg 24 bildet ein Schild, das im Betrieb die Grobstoffe entlang des schräg ansteigenden Gehäuseabschnitts 26 bewegt, insbesondere voranschiebt.

In Fig. 4 ist zu erkennen, dass die Räumelemente 22 mehrere längliche Fortsätze 62 aufweist, die von dem Steg 24 abstehend sind. Die Fortsätze 62 ragen in den Innenraum 55 des Gehäuses 13 hinein. Das Räumelement 22 weist durch die Fortsätze 62 einen rechenartigen Abschnitt auf. Mit anderen Worten ist das Räumelement 22 durch die Fortsätze 62 abschnittsweise kammartig ausgebildet. Die Fortsätze 62 sind in Längsrichtung des Räumelements 22, insbesondere entlang des Stegs 24, verteilt angeordnet. Gemäß Fig. 3 erstreckt sich der Steg 24 des jeweiligen Räumelements 22 über die gesamte Länge des Räumelements 22.

Gemäß den Fig. 1 und 4 verlaufen die Förderketten 21' zumindest abschnittsweise entlang des schräg ansteigenden Gehäuseabschnitts 26. Die Förderketten 21' durchlaufen den Absetzbereich 20, sodass im Betrieb das Räumelement 22 die abgesunkenen Grobstoffe aus dem Absetzbereich 20 fördert. Befindet sich im Betrieb zumindest eines der Räumelemente 22 im Absetzbereich 20, bildet der Steg 24 des Räumelements 22 mit der Innenseite des Gehäuses 13 einen Schubraum für die Grobstoffe. Der Steg 24 kann im Betrieb im Bereich des schräg ansteigenden Gehäuseabschnitts 26 auf der Innenseite des Gehäuseabschnitts 26 gleitend aufliegen.

Wie eingangs beschrieben, umfasst die Abscheidervorrichtung gemäß Fig. 1 und 2 eine Feinstoffentnahmeeinheit 19 mit einer Siebeinrichtung 32 und einer weiteren Fördereinrichtung 33. Die weitere Fördereinrichtung 33 ist eine Pumpe, die mit dem Abscheidebehälter 16 zum Abpumpen von Feinschlamm verbunden ist. Konkret weist der Abscheidebehälter 16 einen ersten Anschluss 63 auf, der in einem Bodenbereich 64 des Abscheidebehälters 16 angeordnet ist. Die Pumpe 33 ist durch eine Leitung 34 mit dem ersten Anschluss 63 verbunden. Die Leitung 34 ist eine Schlauchleitung. Alternativ kann die Leitung 34 eine Rohrleitung sein.

Die Pumpe 33 ist des Weiteren mit der Siebeinrichtung 32 fluidverbunden. Dazu kann eine Schlauchleitung oder eine Rohrleitung vorgesehen sein (nicht dargestellt). Die Siebeinrichtung 32 ist in einem Bypass zum Abscheidebehälter 16 angeordnet.

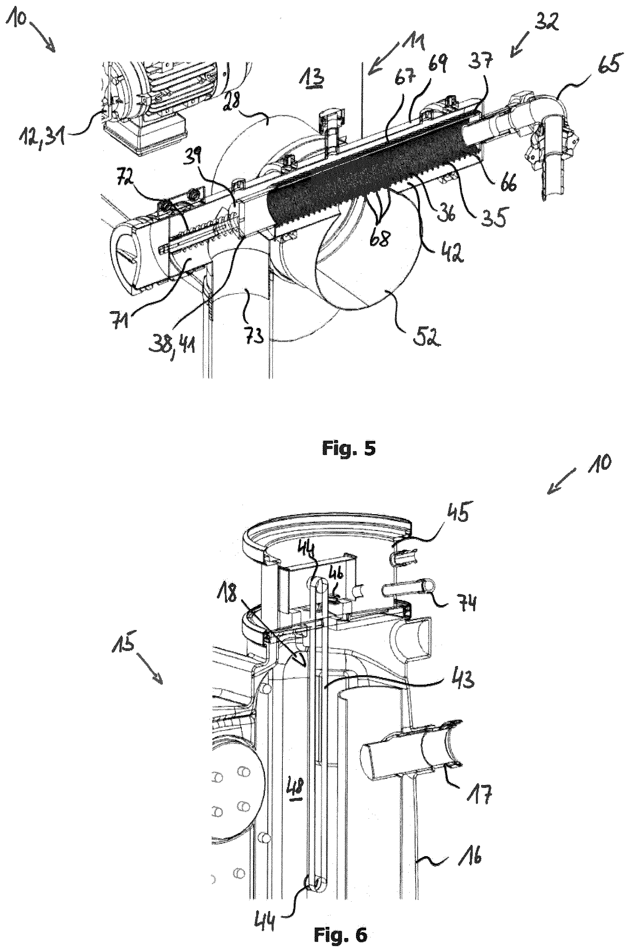

Die Siebeinrichtung 32 ist im Längsschnitt in Fig. 5 gezeigt. Die Siebeinrichtung 32 weist ein Siebelement 35 mit einem über einen Umfang verteilten Flüssigkeitsaustrittbereich 36 und zwei Stirnseiten 37, 38 auf. Das Siebelement 35 ist an einer ersten Stirnseite 37 mit der Pumpe 33 fluidverbunden. An einer der ersten Stirnseite gegenüberliegenden Stirnseite 38 ist das Siebelement 35 druckabhängig verschlossen. Das Siebelement 35 ist an der ersten Stirnseite 37 mit einem zweiten Anschluss 65 ausgestattet, an den die Pumpe 33 durch eine weitere Leitung 34' angeschlossen ist. Diese ist in den Fig. 2 bis 5 nicht dargestellt. Die weitere Leitung 34' kann eine Schlauchleitung sein. Alternativ kann die weitere Leitung 34' eine Rohrleitung sein.

Das Siebelement 35 ist rohrförmig ausgebildet. Mit anderen Worten ist das Siebelement 35 ein Siebrohr. Das Siebelement 35 weist an dessen Innenseite ein wasserdurchlässiges Siebmaterial 66 auf, das außenumfänglich durch ein rippenartiges Halteteil 67 gehalten ist. Das Halteteil 67 weist eine Vielzahl von Durchtrittsöffnungen 68 auf, durch die Flüssigkeit aus dem Inneren des Siebelements 35 durch den Flüssigkeitsaustrittbereich 36 in einen Auffangbereich 42 fließen kann. Der Auffangbereich 42 ist zwischen dem Siebelement 35 und einem das Siebelement 35 umgebenden Gehäuse 69 ausgebildet. Der Auffangbereich 42 ist im konkreten Fall durch einen Ringspalt gebildet.

Wie in Fig. 5 zu erkennen, ist die Siebeinrichtung 35 auf die Rohrleitung 52 aufgesetzt derart, dass der Auffangbereich 42 mit der Rohrleitung 52 fluidverbunden ist. Ferner umfasst die Siebeinrichtung 32 einen Feinschlammaustrittbereich 71, der von dem Auffangbereich 36 räumlich getrennt ist. In den Feinschlammaustrittbereich 71 ist die zweite Stirnseite 38 des Siebelements 32 angeordnet. Ferner ist in dem Feinschlammaustrittbereich 71 ein Ventilkörper 39 und ein Federelement 72 angeordnet, das den Ventilkörper 39 mit einer bestimmten Federkraft gegen die zweite Stirnseite 38 vorspannt. Die Federkraft des Federelements 72 kann variabel einstellbar sein. Das Federelement ist bevorzugt eine Schraubenfeder. Das Federelement 72 kann auch ein Federpaket aus Tellerfedern sein. Andere Federn sind möglich. Der Ventilkörper 39 verschließt durch die Federkraft des Federelements 72 das Siebelement 35 an der zweiten Stirnseite 38. Die zweite Stirnseite 38 bildet einen Ventilsitz 41 für den Ventilkörper 39. Der Ventilkörper 39 ist plattenförmig ausgebildet.

Alternativ zu dem Federelement 72 kann die zweite Stirnseite 38 des Siebelements 32 mittels eines Gegengewichtes verschlossen sein. Das Gegengewicht kann den Ventilkörper 39 gegen die zweite Stirnseite 38 anpressen. Dazu kann das Gegengewicht direkt oder indirekt, insbesondere über einen Mechanismus, mit dem Ventilkörper 39 verbunden sein.

Im Betrieb fördert die Pumpe 33 abgelagerten Feinschlamm aus dem Abscheidebehälter 16 und führt diesen durch die ersten Stirnseite 37 dem Siebelement 35 zu. Die zweite Stirnseite 38 verschließt der Ventilkörper 39. Durch das Zuführen von Feinschlamm wird der Feinschlamm im Inneren des Siebelements 35 komprimiert. Durch den ansteigenden Druck im Inneren des Siebelements 35 wird der zugeführte Feinschlamm entwässert. Die aus dem Feinschlamm austretende Flüssigkeit kann durch den Flüssigkeitsaustrittbereich 36 in den Auffangbereich 42 austreten und durch die Rohrleitung 52 in den Abscheidebehälter 16 zurückfließen.

Wird im Inneren des Siebelements 32 ein Grenzdruck erreicht, der größer als der durch das Federelement 72 erzeugt Gegendruck ist, hebt der Ventilkörper 39 von der zweiten Stirnseite 38 ab. Dadurch tritt Feinschlamm durch die zweite Stirnseite 38 aus und fällt durch eine Entsorgungsöffnung 73 in den zweiten Sammelbehälter 54. Durch den Austritt des Feinschlamms senkt sich der Druck im Inneren des Siebelements 35 bis unter den Grenzdruck ab, sodass der Ventilkörper 39 die zweite Stirnseite 38 wieder verschließt. Im Betrieb der Feinschlammentnahmeeinheit 19 ist dies ein wiederkehrender Mechanismus.

In Fig. 6 ist der Skimmer 18 gezeigt, der an dem Abscheidebehälter 16 angeordnet ist. Der Skimmer 18 dient zum Entfernen von einer in dem Abscheidebehälter 16 aufschwimmenden Fettschicht. Der Skimmer 18 ragt in den Abscheidebehälter 16 teilweise derart ein, dass ein Flüssigkeitsaufnahmeelement 43 mit der Fettschicht in Kontakt steht. Das Flüssigkeitsaufnahmeelement 43 ist umlaufend geschlossen und über zwei Umlenkrollen 44 geführt. Einer der Umlenkrollen 44 ist mit einem elektrischen Antrieb (nicht dargestellt) gekoppelt und treibt das Flüssigkeitsaufnahmeelement 43 im Betrieb an. Der Skimmer 18 ist stehend angeordnet. Das Flüssigkeitsaufnahmeelement 43 ist ein Skimmerband an dem das Fett durch Adhäsion anhaftet.

Wie in Fig. 6 gezeigt, ist verläuft das Skimmerband zwischen dem Abscheidebehälter 16 und einem auf dem Abscheidebehälter 16 angeordneten Auffangbehälter 45 für Fett. Das Skimmerband unterragt in Einbaulage den Ablauf 17 des Abscheidebehälters 16.

Der Auffangbehälter 45 ist in Einbaulage am Abscheidebehälter 16 oben angeordnet. Der Skimmer 18 weist ferner einen Abstreifer 46 auf, der im Auffangbehälter 45 an dem Skimmerband angeordnet ist. Der Abstreifer 46 steht mit einer Oberfläche des Skimmerbands in Kontakt und streift im Betrieb das anhaftende Fett von dem Skimmerband in den Auffangbehälter 45 ab. Der Auffangbehälter 45 umfasst einen dritten Anschluss 74, durch den das aufgefangene Fett abführbar ist oder selbstständig abläuft. Dafür ist beispielsweise ein dritter Sammelbehälter 77 vorgesehen. Der Auffangbehälter 45 und der Skimmer 18 sind am Abscheidebehälter 16 im Bereich des Ablaufs 17 angeordnet.

Gemäß dem Längsschnitt in Fig. 3 ist ersichtlich, dass es sich bei dem Abscheidebehälter 16 um einen Schwerkraftabscheider handelt. Der Abscheidebehälter 16 weist im Bodenbereich 64 einen Feinstoffsammelbereich 47, einen in Einbaulage obenliegenden Aufschwimmbereich 48 für Fett und/oder aufschwimmende Feststoffe und einen dazwischenliegenden Abscheidebereich 49 auf. Der Abscheidebehälter 16 weist einen Zulauf 51 zur Aufnahme des von der Grobfangeinheit 11 vorgereinigten Abwassers und den Ablauf 17 zum Abführen des gereinigten Abwassers auf. Der Zulauf 51 und der Ablauf 17 sind an dem Abscheidebehälter 16 seitlich angeordnet. Der Zulauf 51 und der Ablauf 17 weisen innerhalb des Abscheidebehälters 16 einen in Richtung des Bodenbereichs 64 gerichteten Verlauf auf. Mit anderen Worten weisen der Zulauf 51 und der Ablauf 17 jeweils ein freies Ende 75 auf, das in Einbaulage nach unten ausgerichtet ist. Das freie Ende 75 des Zulaufs 51 weist dabei einen größeren Abstand von dem Behälterboden 53 auf, als das freie Ende 75 des Ablaufs 17. Innerhalb des Abscheidebehälters 16 bilden der Zu- und Ablauf 17, 51 ein Tauchrohr.

Der Abscheidebehälter 16 der Abscheidervorrichtung 10 gemäß Fig. 1 weist im Feinstoffsammelbereich 47 zwei zur Mitte zulaufende Bodenschrägen 76 auf, die die den abgesetzten Feinschlamm an eine Entnahmestelle für die Feinstoffentnahmeeinheit 19 leitet. Bei der Abscheidevorrichtung 10 gemäß Fig. 2 ist der Bodenbereich 64 frei von einer Bodenschräge ausgebildet. In diesem Feinstoffsammelbereich 47 sind keine Bodenschrägen angeordnet. Dennoch kann die Abscheidevorrichtung 10 gemäß Fig. 2 bei einer alternativen Ausgestaltung im Feinstoffsammelbereich 47 vorzugsweise ein oder mehrere Bodenschrägen aufweisen.

Die Abscheidervorrichtungen gemäß Fig. 1 und 2 umfassen jeweils eine nicht dargestellte Steuereinheit, die einen automatisierten Betrieb ermöglicht. Die Steuereinheit kann als übergeordnete Steuerung mit der Grobfangeinheit 11, der Feinstoffentnahmeeinheit 19 und dem Skimmer 18 signalübertragend verbunden sein. Alternativ oder zusätzlich kann die Grobfangeinheit 11, die Feinstoffentnahmeeinheit 19 und der Skimmer 18 jeweils mit einer separaten Steuereinheit signalübertragend verbunden sein. Insbesondere kann die Steuereinheit den elektrischen Antrieb 31 der Grobfangeinheit 11, die Pumpe 33 der Feinstoffentnahmeeinheit 19 und/oder den Skimmerantrieb zeitintervallgesteuert betätigen. Im Falle des Skimmers 18 kann zusätzlich oder alternativ wenigstens ein Sensor zur Messung der Fettschicht an dem Abscheidebehälter 16 angeordnet sein, der bei Bedarf den Skimmer 18 aktiviert bzw. deaktiviert.

### Bezuaszeichenliste

- 10: Abscheidervorrichtung
- 11: Grobfangeinheit
- 12: Fördereinrichtung
- 13: Gehäuse
- 14: Zulauf der Grobfangeinheit
- 15: Abscheidereinheit
- 16: Abscheidebehälter
- 17: Ablauf des Abscheidebehälters
- 18: Skimmer
- 19: Feinstoffentnahmeeinheit
- 20: Absetzbereich
- 21: Fördermittel
- 21': Förderkette
- 22: Räumelement
- 23: erster Sammelbehälter
- 24: Steg
- 25: Außenumfang
- 26: schräg ansteigender Gehäuseabschnitt
- 27: Entsorgungskante
- 28: Ablauf des Gehäuses
- 29: Umlenkrollen
- 29': angetriebene Umlenkrolle
- 31: Antrieb
- 32: Siebeinrichtung
- 33: weitere Fördereinrichtung
- 34: Leitung
- 34': weitere Leitung
- 35: Siebelement
- 36: Flüssigkeitsaustrittbereich
- 37: erste Stirnseite
- 38: zweite Stirnseite
- 39: Ventilkörper
- 41: Ventilsitz
- 42: Auffangbereich
- 43: Flüssigkeitsaufnahmeelement
- 44: Umlenkrollen
- 45: Auffangbehälter
- 46: Abstreifer
- 47: Feinstoffsammelbereich
- 48: Aufschwimmbereich
- 49: Abscheidebereich
- 51: Zulauf des Abscheidebehälters
- 52: Rohrleitung
- 53: Behälterboden
- 54: zweiter Sammelbehälter
- 55: Innenraum
- 56: Tiefpunkt
- 57: Rückwand
- 58: Entsorgungsabschnitt
- 59: Seitenwand
- 59': Öffnung
- 61: Führungsabschnitt
- 62: längliche Fortsätze
- 63: erster Anschluss
- 64: Bodenbereich
- 65: zweiter Anschluss
- 66: Siebmaterial
- 67: Halteteil
- 68: Durchtrittsöffnungen
- 69: Gehäuse der Siebeinrichtung
- 71: Feinschlammaustrittbereich
- 72: Federelement
- 73: Entsorgungsöffnung
- 74: dritter Anschluss
- 75: freies Ende
- 76: Bodenschräge
- 77: dritter Sammelbehälter
- F: Förderrichtung

## Patentansprüche

1. Abscheidervorrichtung (10) zum Reinigen von Abwasser, umfassend:
- wenigstens eine Grobfangeinheit (11) zum Abtrennen von in dem zugeführten Abwasser befindlichen Grobstoffen, die eine Fördereinrichtung (12) und ein Gehäuse (13) mit wenigstens einem Zulauf (14) für das zu reinigende Abwasser aufweist;
- wenigstens eine Abscheidereinheit (15) zum Abtrennen von aufschwimmenden Flüssigkeiten, insbesondere von Fetten, und/oder von aufschwimmenden Feststoffen und/oder von absinkenden Feinstoffen aus der durch die Grobfangeinheit (11) vorgereinigten Flüssigkeit, insbesondere aus organischem Abwasser, wobei die Abscheidereinheit (15) der Grobfangeinheit (11) in Fließrichtung nachgeordnet ist und wenigstens einen Abscheidebehälter (16) zum Aufnehmen der vorgereinigten Flüssigkeit aufweist, der wenigstens einen Ablauf (17) für gereinigtes Abwasser umfasst;
- wenigstens einen Skimmer (18) zum Entfernen von in dem Abscheidebehälter (16) aufschwimmenden Flüssigkeiten; und
- wenigstens eine Feinstoffentnahmeeinheit (19), die mit dem Abscheidebehälter (16) zur Entnahme von abgesunkenen Feinstoffen, insbesondere von Feinschlamm, verbunden ist,
**dadurch gekennzeichnet, dass**
das Gehäuse (13) der Grobfangeinheit (11) wenigstens einen Absetzbereich (20) zum Aufnehmen von absinkenden Grobstoffen und die Fördereinrichtung (12) wenigstens ein in Förderrichtung (F) umlaufend geschlossenes Fördermittel (21), insbesondere Endlosfördermittel, mit wenigstens einem Räumelement (22) aufweist, wobei das Fördermittel (21) den Absetzbereich (20) zumindest teilweise derart durchläuft, dass das Räumelement (22) im Betrieb die abgesunkenen Grobstoffe aus dem Absetzbereich (20) fördert.

2. Abscheidervorrichtung (10) nach Anspruch 1,
**dadurch gekennzeichnet, dass**
das Fördermittel (21) wenigstens ein Band und/oder wenigstens einen Riemen und/oder wenigstens eine Kette umfasst.

3. Abscheidervorrichtung (10) nach Anspruch 1 oder 2,
**dadurch gekennzeichnet, dass**
das Räumelement (22) wenigstens einen Steg (24) aufweist, der an einem Außenumfang (25) des Fördermittels (21) angeordnet ist und entgegen der Förderrichtung (F) eine Begrenzung für die zu fördernden Grobstoffe bildet.

4. Abscheidervorrichtung (10) nach einem der vorhergehenden Ansprüche,
**dadurch gekennzeichnet, dass**
das Gehäuse (13) wenigstens einen in Einbaulage schräg ansteigenden Gehäuseabschnitt (26) mit einer Entsorgungskante (27) aufweist, wobei an dem Gehäuseabschnitt (26) das Fördermittel (21) zumindest teilweise derart entlang verläuft, dass das Räumelement (22) im Betrieb die im Absetzbereich (20) befindlichen Grobstoffe über die Entsorgungskante (27) in den ersten Sammelbehälter (23) fördert.

5. Abscheidervorrichtung (10) nach einem der vorhergehenden Ansprüche,
**dadurch gekennzeichnet, dass**
das Gehäuse (13) wenigstens einen Ablauf (28) für das vorgereinigte Abwasser aufweist, der in Einbaulage von dem Zulauf (14) nach unten versetzt ist oder in Einbaulage mit dem Zulauf (14) auf einer gemeinsamen Höhenlage angeordnet ist.

6. Abscheidervorrichtung (10) nach einem der vorhergehenden Ansprüche,
**dadurch gekennzeichnet, dass**
die Fördereinrichtung (12) mehrere Umlenkrollen (29) aufweist, an denen das Fördermittel (21) umgelenkt ist, wobei das Fördermittel (21) mit jeweils einem Umfang der Umlenkelemente zumindest abschnittsweise in Kontakt steht, und/oder wenigstens eine der Umlenkrollen (29') mit einem Antrieb (31), insbesondere einem Elektromotor, gekoppelt ist, der die Umlenkrolle (29') im Betrieb in Rotation versetzt, um das Räumelement (22) in Förderrichtung (F) zu bewegen.

7. Abscheidervorrichtung (10) nach einem der vorhergehenden Ansprüche,
**dadurch gekennzeichnet, dass**
die Feinstoffentnahmeeinheit (19) eine Siebeinrichtung (32) zum Entwässern und Entsorgen der Feinstoffe und wenigstens eine weitere Fördereinrichtung (33), insbesondere eine Pumpe, aufweist, die mit dem Abscheidebehälter (16) und der Siebeinrichtung (32) über wenigstens eine Leitung (34) verbunden ist, und/oder die Siebeinrichtung (32) wenigstens ein Siebelement (35), insbesondere ein Siebrohr, mit einem über einen Umfang verteilten Flüssigkeitsaustrittbereich (36) und zwei Stirnseiten (37, 38) aufweist, wobei das Siebelement (35) an einer ersten Stirnseite (37) mit der weiteren Fördereinrichtung (33) fluidverbunden ist und an einer zweiten Stirnseite (38) druckabhängig öffenbar ist.

8. Abscheidervorrichtung (10) nach Anspruch 7,
**dadurch gekennzeichnet, dass**
das Siebelement (35) wenigstens einen Ventilkörper (39) umfasst, der die zweite Stirnseite (38) federbelastet und/oder schwerkraftbelastet verschließt, wobei die zweite Stirnseite (38) einen Ventilsitz (41) für den Ventilkörper (39) bildet.

9. Abscheidervorrichtung (10) nach einem der Ansprüche 7 bis 8,
**dadurch gekennzeichnet, dass**
die Siebeinrichtung (32) wenigstens einen Auffangbereich (42) aufweist, der mit der Vielzahl der Öffnungen (36) des Siebelements (35) korrespondiert, um aus den Feinstoffen austretende Flüssigkeit aufzunehmen, wobei der Auffangbereich (42) mit dem Abscheidebehälter (16) zur Flüssigkeitsrückführung fluidverbunden ist und/oder die Siebeinrichtung (32) und/oder das Gehäuse (13) der Grobfangeinheit (11) mit einem ersten Sammelbehälter (23) und/oder einem zweiten Sammelbehälter (54) verbunden ist/sind.

10. Abscheidervorrichtung (10) nach einem der vorhergehenden Ansprüche,
**dadurch gekennzeichnet, dass**
der Skimmer (18) in den Abscheidebehälter (16) zumindest teilweise derart einragt, dass wenigstens ein Flüssigkeitsaufnahmeelement (43) mit einer Schicht aus aufschwimmender Flüssigkeit in Kontakt steht, und/oder wenigstens einen Abstreifer (46) aufweist, der im Betrieb die aufgenommene Flüssigkeit von dem Flüssigkeitsaufnahmeelement (43) in einen Auffangbehälter (45) abstreift.

11. Abscheidervorrichtung (10) nach Anspruch 10,
**dadurch gekennzeichnet, dass**
das Flüssigkeitsaufnahmeelement (43) umlaufend geschlossen ist und über zumindest zwei Umlenkrollen (44) geführt ist, wobei wenigstens eine der Umlenkrollen (44) das Flüssigkeitsaufnahmeelement (43) antreibt.

12. Abscheidervorrichtung (10) nach einem der vorhergehenden Ansprüche,
**dadurch gekennzeichnet, dass**
wenigstens ein Auffangbehälter (45) vorgesehen ist, der in Einbaulage am Abscheidebehälter (16) oben angeordnet ist, wobei der Skimmer (18) in den Auffangbehälter (45) zum Ablagern von aufgenommener Flüssigkeit, insbesondere von Fett, aus dem Abscheidebehälter (16) zumindest teilweise einragt.

13. Abscheidervorrichtung (10) nach einem der vorhergehenden Ansprüche,
**dadurch gekennzeichnet, dass**
der Abscheidebehälter (16) wenigstens einen in Einbaulage untenliegenden Feinstoffsammelbereich (47), wenigstens einen in Einbaulage obenliegenden Aufschwimmbereich (48) für aufschwimmende Flüssigkeit und einen dazwischenliegenden Abscheidebereich (49) aufweist, in den wenigstens ein Zulauf (51) und der Ablauf (17) von oben einragt.

14. Abscheidervorrichtung (10) nach einem der vorhergehenden Ansprüche,
**gekennzeichnet durch,**
wenigstens eine Steuereinheit mit der Grobfangeinheit (11) und/oder der Abscheidereinheit (15) und/oder der Feinstoffentnahmeeinheit (19) und/oder dem Skimmer (18) zum Ansteuern signalübertragend verbunden ist.

15. Verfahren zum Reinigen von Abwasser mit einer Abscheidervorrichtung (10), insbesondere nach einem der vorhergehenden Ansprüche, wobei das Verfahren folgende Schritte umfasst:
- Entfernen von Grobstoffen aus dem Abwasser durch wenigstens eine Grobfangeinheit (11), das eine Fördereinrichtung (12) und ein Gehäuse (13) mit wenigstens einem Zulauf (14) für das zu reinigende Abwasser aufweist;
- Abtrennen von in dem vorgereinigten Abwasser befindlichen Fetten und/oder Feinstoffen durch wenigstens eine Abscheidereinheit (15), die der Grobfangeinheit (11) in Fließrichtung nachgeordnet ist und wenigstens einen Abscheidebehälter (16) zum Aufnehmen der vorgereinigten Flüssigkeit aufweist;
- Entfernen von in dem Abscheidebehälter (16) aufschwimmender Flüssigkeit, insbesondere Fett; und
- Entnehmen von in dem Abscheidebehälter (16) abgesunkenen Feinstoffen, insbesondere von Feinschlamm, durch wenigstens eine Feinstoffentnahmeeinheit (19), die mit dem Abscheidebehälter (16) verbunden ist,
**dadurch gekennzeichnet, dass**
das Gehäuse (13) der Grobfangeinheit (11) wenigstens einen Absetzbereich (20) umfasst, in den Grobstoffe des zugeführten Abwassers absinken, und die Fördereinrichtung (12) wenigstens ein in Förderrichtung (F) umlaufend geschlossenes Fördermittel (21), insbesondere Endlosfördermittel, mit wenigstens einem Räumelement (22) aufweist, wobei das Fördermittel (21) den Absetzbereich (20) zumindest teilweise derart durchläuft, dass das Räumelement (22) die abgesunkenen Grobstoffe aus dem Absetzbereich (20) fördert.

16. Verfahren nach Anspruch 15,
**dadurch gekennzeichnet, dass**
die Grobfangeinheit (11) und/oder die Feinstoffentnahmeeinheit (19) und/oder der Skimmer (18) durch wenigstens eine Steuereinheit, insbesondere in Intervallen, bevorzugt in Zeitintervallen und/oder Volumenintervallen, angesteuert werden.
